# EUROPÄISCHE PATENTSCHRIFT

(11) **EP 2 427 708 B1**
(45) Veröffentlichungstag und Bekanntmachung des Hinweises auf die Patenterteilung: **01.08.2018**
(21) Anmeldenummer: 10714314.1
(22) Anmeldetag: 22.04.2010
(51) Int. Cl.: F25D 23/02

(54) **HAUSHALTSKÄLTEGERÄT UND WÄRMEISOLIERENDE WANDUNG EINES HAUSHALTSKÄLTEGERÄTES**
DOMESTIC REFRIGERATION APPLIANCE, AND HEAT-INSULATING WALL OF A DOMESTIC REFRIGERATION APPLIANCE
APPAREIL RÉFRIGÉRANT À USAGE DOMESTIQUE ET PAROI THERMO-ISOLANTE D'UN APPAREIL RÉFRIGÉRANT À USAGE DOMESTIQUE

(30) Priorität: 04.05.2009 DE 102009002800
(43) Veröffentlichungstag der Anmeldung: 14.03.2012
(73) Patentinhaber: BSH Hausgeräte GmbH, 81739 München (DE)
(72) Erfinder: KOHN, Sandro, 53127 Bonn (DE); PATCHALA, Dasaradh, Kumar, 89231 Neu-Ulm (DE); STELZER, Jörg, 89537 Giengen (DE)
(86) Internationale Anmeldenummer: PCT/EP2010/055341
(87) Internationale Veröffentlichungsnummer: WO 2010/127947

(56) Entgegenhaltungen:
- EP-A1- 0 434 225
- EP-A1- 1 484 563
- WO-A1-98/34077
- GB-A- 729 393
- JP-A- 8 082 474
- JP-A- H0 777 383
- JP-A- 2008 249 003
- US-A- 5 018 328
- US-A- 5 066 437
- US-A- 5 505 810

## Beschreibung

Die Erfindung betrifft ein Haushaltskältegerät und ein wärmeisolierendes Türblatt eines Haushaltskältegerätes.

Ein konventionelles Haushaltskältegerät weist einen wärmeisolierenden Korpus auf, der einen Kälteraum begrenzt und an dem ein wärmeisolierendes Türblatt zum Verschließen des Kälteraums angeschlagen ist. Der Korpus und das Türblatt umfassen jeweils eine Innenhaut und eine Außenhaut, die einen mit einem Isolierschaum gefüllten Hohlraum begrenzen.

Aus der EP 1 484 563 A1 ist ein schwer entflammbares Isolierelement für einen Kühlschrank bekannt. Das Isolierelement umfasst ein anorganisches Fasermaterial, welches von einem Kunststofffilm mit Gasbarriere-Eigenschaften umgeben und evakuiert ist.

Aus der US 5 066 437 A ist ein Isolierungssystem zu entnehmen, welches zwei evakuierte Hohlräume in einem Gehäuse aus einer ersten und einer zweiten Kunststoffhaut umfasst. Der erste Hohlraum ist dabei mit einem Pulver gefüllt, während der zweite Hohlraum mit einem Kunststoffschaum gefüllt ist.

Aus der JP 2008 249003 A2 ist ein Vakuum-Isoliersystem für ein Haushaltsgerät zum Kochen und Backen bekannt. Das Isoliersystem umfasst dabei eine Glasschicht, welche einen evakuierten Hohlraum bildet, in dem anorganische Fasern, ein so genannter Getter, der dazu dient, ein Vakuum im Hohlraum möglichst lange zu erhalten, sowie eine die Fasern und den Getter ummantelnde Metallfolie angeordnet sind.

Aus der GB 729 393 A ist eine Tür für ein Haushaltsgerät bekannt, welche eine innere Wand und eine mit der inneren Wand verbundene äußere Wand aufweist. Die beiden Wände bestehen aus Metall und begrenzen einen evakuierten Hohlraum, der mit Glasfasern gefüllt ist.

Aus der JP H07 77383 A ist ein Kältegerät bekannt, bei welchem die Zersetzungsfähigkeit verbessert werden soll, indem Komponenten leichter voneinander trennbar sein sollen.

Aufgabe der Erfindung ist es, eine verbessertes wärmeisolierendes Türblatt eines Haushaltskältegerätes anzugeben.

Die Aufgabe der Erfindung wird gelöst durch ein wärmeisolierendes Türblatt eines Haushaltskältegerätes, aufweisend eine erste Haut und eine zweite Haut, die an ihren Rändern zumindest weitgehend luftdicht miteinander fest verbunden sind und einen evakuierten Hohlraum einschließen. Das erfindungsgemäße Türblatt ist insbesondere als ein Türblatt des Haushaltskältegerätes ausgebildet. Im Falle des Türblatts handelt es sich bei der ersten Haut um die einem Kälteraum des Haushaltskältegerätes zugewandte Innenhaut und bei der zweiten Haut um die dem Kälteraum abgewandte Außenhaut.

Bei dem erfindungsgemäßen Türblatt ist die erste Haut aus einem Kunststoff und die zweite Haut aus Metall gefertigt. Das Metall ist vorzugsweise Aluminium oder rostfreier Edelstahl. Diese Ausführung bietet ein relativ wertiges Erscheinungsbild des erfindungsgemäßen Haushaltskältegerätes, erlaubt jedoch auch eine relativ kostengünstige Fertigung.

Die aus Metall gefertigte zweite Haut ist auf der dem Hohlraum zugewandten Seite mit einem Kunststoff beschichtet. Dies unterstützt je nach verwendeter Methode zum festen Verbinden der beiden Häute ein relativ einfaches und demnach kostengünstiges Befestigen. Das Metall ist auf der dem Hohlraum zugewandten Seite beispielsweise mit PP (Polypropylen), PE (Polyethen), PET (Polyethylenterephthalat) oder EVA (Ethyl Vinyl Acetat) beschichtet.

Das erfindungsgemäße Türblatt weist den evakuierten Hohlraum auf. Um Vorraussetzungen dafür zu schaffen, dass die aus Kunststoff gefertigte erste Haut und/oder der Kunststoff der zweiten Haut relativ luftundurchlässig ist, umfasst nach einer bevorzugten Variante die relevante Haut einen Kunststoff mit mehreren Schichten.

Wenigstens eine dieser Schichten ist nach einer Ausführungsform des erfindungsgemäßen Türblatts als eine für Gas, insbesondere für Stickstoff, Sauerstoff, Wasserdampf und/oder Kohlendioxid zumindest weitgehend undurchlässige Sperrschicht ausgebildet. Geeignete Materialen für die Sperrschicht sind z.B. EVOH (Ethylen Vinyl Alkohol) oder PVdC (Polyvinylidenchlorid).

Um den mehrschichtigen Kunststoff herzustellen, kann wenigstens eine der Schichten als eine Bindungsschicht ausgeführt sein, die zwischen zwei der Schichten angeordnet ist. Die Bindungsschicht kann in relativ einfacher Weise als eine Klebeschicht ausgeführt sein. Die Klebschicht kann vorzugsweise auf PP (Polypropylen), Epoxy oder EVA (Ethyl Vinyl Acetat) basieren.

Die dem Hohlraum zugewandte Schicht (Innenschicht) des mehrschichtigen Kunststoffs kann vorzugsweise aus HIPS (High Impact Polystyrene, beispielsweise durch Kautschuk modifiziertes, hochschlagfestes Polystyrol), PP (Polypropylen) oder PE (Polyethen) gefertigt sein. Auch die dem nach Außen gerichtete Schicht (Außenschicht) kann vorzugsweise aus HIPS, PP oder PE gefertigt sein.

Vorzugsweise weist der mehrschichtige Kunststoff fünf Schichten auf. Die Außenschicht ist vorzugsweise aus HIPS und die dem Hohlraum zugewandte Innenschicht ist vorzugsweise aus PE oder HIPS. Die mittlere Schicht ist vorzugsweise eine Sperrschicht insbesondere aus EVOH oder PVdC. Zwischen der Sperrschicht und der Außenschicht bzw. der Innenschicht ist vorzugsweise jeweils eine Bindungsschicht, vorzugsweise eine Klebeschicht, angeordnet.

Bei dem erfindungsgemäßen Türblatt sind die erste Haut und die zweite Haut an ihren Rändern mittels Fügens zumindest weitgehend luftdicht miteinander fest verbunden.

Dies kann z.B. realisiert werden, indem die erste Haut und die zweite Haut an ihren Rändern mittels eines Klebstoffs zumindest weitgehend luftdicht miteinander fest verbunden sind. Das Verkleben der beiden Häute lässt sich relativ einfach und kostengünstig realisieren, insbesondere dann, wenn der Klebstoff beispielsweise auf 2K PU, Epoxy, Gummi, Silikonoxid oder Polyolefin basiert. Um die Klebewirkung des Klebstoffs zu erhöhen, kann dieser nach dem Auftragen und dem Zusammenfügen der beiden Häute einer Corona-, Pyrosil-, Plasma- oder Hitzebehandlung unterzogen werden. Nach einer bevorzugten Ausführungsform des erfindungsgemäßen Türblatts ist die erste Haut in ihrem Randbereich insbesondere umfänglich in Richtung der zweiten Haut umgebogen oder umgeknickt und die zweite Haut in ihrem Randbereich insbesondere umfänglich in Richtung der ersten Haut umgebogen oder umgeknickt, wodurch zwischen den umgeknickten oder umgebogenen Bereichen der ersten und zweiten Haut ein Spalt entsteht, der mit dem Klebstoff gefüllt ist. Aufgrund der überlappend umgeknickten bzw. umgebogenen Ränder der beiden Häute entsteht demnach der Spalt, der relativ einfach mit dem Klebstoff für die zumindest weitgehend luftdichte feste Verbindung der beiden Häute gefüllt werden kann. Dadurch kann das erfindungsgemäße Türblatt relativ kostengünstig hergestellt werden. Im Falle des Türblatts kann insbesondere der umgeknickte bzw. umgebogene Teil der zweiten Haut, d.h. der Außenhaut die Seitenkanten des Türblatts bilden.

Das Fügen kann gemäß einer weiteren Variante des erfindungsgemäßen Türblatts realisiert werden, indem die erste Haut und die zweite Haut an ihren Rändern mittels Schweißens zumindest weitgehend luftdicht miteinander fest verbunden sind. Besonders geeignet ist das Heizplattenschweißen, das Wärmekontaktschweißen oder das Infrarotschweißen. Die erste Haut besteht aus Kunststoff und die zweite Haut aus dem mit Kunststoff beschichteten Metall. Für diese Variante ist es dann nur nötig, die Ränder der beiden Häute für den Schweißvorgang nahe genug heranzuführen. Aufgrund des Schweißvorgangs schmelzen der Kunststoff der relevanten Haut bzw. der beschichtete Kunststoff in den Randbereichen, um sich z. B. zu einer Versiegelungsschicht zwischen den beiden Häuten zu verbinden. Die Versiegelungsschicht ist zumindest weitgehend luftdicht, wodurch die zumindest weitgehend luftdichte feste Verbindung zwischen den beiden Häuten realisiert wird.

Die zweite Haut kann nach einer Variante des erfindungsgemäßen Türblatts in ihrem Randbereich in Richtung der ersten Haut gebogen oder geknickt sein und in ihrem Randbereich einen parallel zur ersten Haut flanschartigen Abschnitt aufweisen, der mit dem Randbereich der ersten Haut zumindest weitgehend luftdicht fest verbunden ist. Dieser Bereich kann z.B. einen Spalt bilden, der mit dem Klebstoff gefüllt ist. Dieser Bereich kann aber auch relativ einfach mittels Schweißens fest verbunden sein, insbesondere dann, wenn eine der Häute, insbesondere die erste Haut aus Kunststoff und die andere Haut, vorzugsweise die zweite Haut aus dem mit Kunststoff beschichteten Metall besteht.

Das erfindungsgemäße Türblatt weist den evakuierten Hohlraum auf. Um beispielsweise die Gefahr zu vermindern, dass die Häute luftdurchlässig sind, können die dem Hohlraum zugewandten Seiten der ersten Haut und der zweiten Haut mit einer Folie überzogen sein.

Für eine verbesserte Stabilität des erfindungsgemäßen Türblatts kann die erste Haut und/oder die zweite Haut mit in den Hohlraum ragenden Verstrebungen versehen sein.

Im Hohlraum kann eine so genannte Low-E (Low-emissivity, geringes Strahlungsvermögen) Folie angeordnet sein. Low-E Folien sind insbesondere dünne Metallfolien oder Metalloxidfolien, wie sie u. a. auch für die Beschichtung von Wärmeglas verwendet werden, um die Wärmeleitfähigkeit zu verringern.

Für eine verbesserte Stabilität des erfindungsgemäßen Türblatts ist nach einer bevorzugten Ausführungsform der Hohlraum mit einem evakuierten Füllmaterial gefüllt. Geeignete evakuierte Füllmaterialien sind z.B. offenporiges Polyurethan, offenporiges Polystyren oder insbesondere Silika Pulver.

Ein weiterer Aspekt der Erfindung betrifft ein Haushaltskältegerät, aufweisend einen wärmeisolierenden Korpus, der einen Kälteraum begrenzt, und ein an dem Korpus angeschlagenes Türblatt, wobei das Türblatt gemäß dem erfindungsgemäßen Türblatt, und die erste Haut als eine dem Kälteraum zugewandte Innenhaut und die zweite Haut als eine dem Kälteraum abgewandte Außenhaut des Türblatts ausgebildet ist.

Konventionelle wärmeisolierende Türblätter umfassen einen Isolierschaum, um die Wärmeisolierung zu realisieren. Das erfindungsgemäße Türblatt des Haushaltskältegeräts weist jedoch den evakuierten Hohlraum auf, der von den beiden Häuten, im Falle des Türblatts einer Innenhaut und einer Außenhaut des Türblatts eingeschlossen ist. Aufgrund des evakuierten Hohlraums erhöht sich die wärmeisolierende Wirkung, wodurch beispielsweise das Türblatt dünner als ein konventionelles Türblatt ausgeführt werden kann. So ist es z.B. möglich das Türblatt derart auszuführen, dass die Innenhaut und die Außenhaut des Türblatts in einem Abstand von 30 mm bis 40 mm voneinander beabstandet sind.

Im geschlossenen Zustand des erfindungsgemäßen Haushaltskältegerätes können das Türblatt und der Korpus einen Spalt bilden. Um den Kälteraum verbessert wärmeisoliert auszuführen, weist nach einer Variante des erfindungsgemäßen Haushaltskältegerätes die Innenhaut auf ihrer dem Kälteraum zugewandten Seite eine Ausbuchtung zum Verkleinern der Breite des Spalts auf.

Ausführungsbeispiele der Erfindung sind exemplarisch in den beigefügten schematischen Zeichnungen dargestellt. Es zeigen:
- Fig. 1: eine Draufsicht eines Haushaltskältegerätes mit einem Korpus und einem Türblatt in geschnittener Darstellung,
- Figuren 2, 3: Draufsichten alternativer Türblätter für das Haushaltskältegerät in geschnittenen Darstellungen,
- Fig. 4: eine den Aufbau der Innenhaut des Türblatts des Haushaltskältegerätes veranschaulichende Darstellung,
- Fig. 5: eine Draufsicht eines weiteren Türblatts für das Haushaltskältegerät in geschnittener Darstellung,
- Fig. 6: das Türblatt der Fig. 5 in einer Explosionszeichnung,
- Figuren 7 - 12: verschiedene Stadien während des Herstellens des Türblatts der Figuren 5 und 6 mittels Heizplattenschweißens,
- Fig. 13: ein Diagramm zum Veranschaulichen des Herstellens des Türblatts der Figuren 5 und 6 mittels Wärmekontaktschweißens,
- Fig. 14: eine Draufsicht eines weiteren Türblatts für das Haushaltskältegerät in geschnittener Darstellung und
- Figuren 15, 16: Draufsichten weiterer Türblätter für das Haushaltskältegerät in geschnittenen Darstellungen.

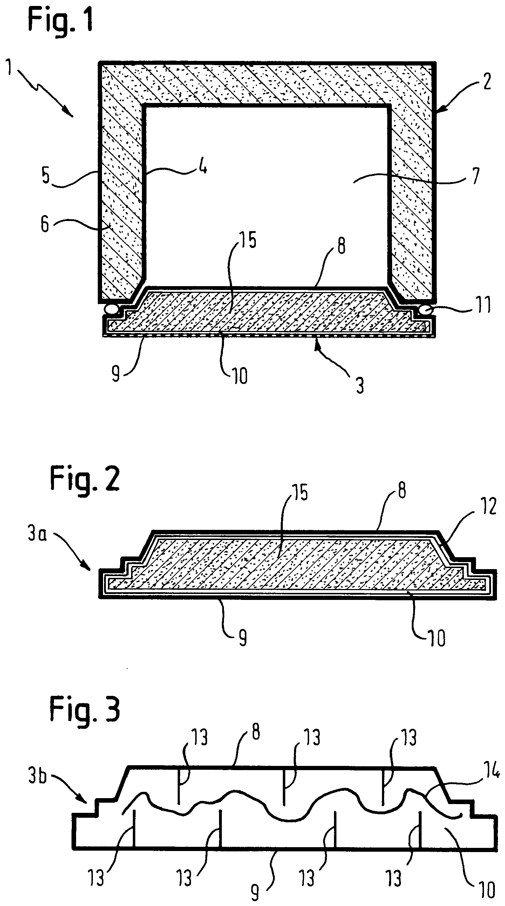

Die Fig. 1 zeigt eine Draufsicht eines Haushaltskältegerätes 1 in geschnittener Darstellung. Das Haushaltskältegerät 1 ist z. B. ein Haushaltskühlgerät oder ein Haushaltsgefriergerät und weist einen wärmeisolierenden Korpus 2 und ein am Korpus 2 z. B. mittels nicht dargestellter Scharniere angeschlagenes Türblatt 3 auf. Der Korpus 2 umfasst eine Innenhaut 4 und eine Außenhaut 5, die einen mit Isolierschaum 6 beispielsweise aus Polyurethane gefüllten Zwischenraum begrenzen.

Der Korpus 2 begrenzt einen Kälteraum 7, der bei geschlossenem Türblatt 3 verschlossen und bei geöffnetem Türblatt 3 zugänglich ist. Im Kälteraum 7 können nicht näher gezeigte Fächer oder Schubladen vorgesehen sein, auf denen bzw. in denen Kältegut abgelegt werden kann.

Das Türblatt 3 weist im Falle des vorliegenden Ausführungsbeispiels eine dem Kälteraum 7 zugewandte Innenhaut 8 und eine dem Kälteraum 7 abgewandte Außenhaut 9 auf, die einen Hohlraum 10 einschließen, der evakuiert ist. D. h. die Innenhaut 8 und die Außenhaut 9 schließen ein Vakuum ein, was sich positiv auf die Wärmeisolierung des Türblatts 3 auswirkt. An der dem Korpus 2 zugewandten Seite der Innenhaut 8 ist ferner eine insbesondere rahmenförmige Dichtung 11 beispielsweise aus Gummi befestigt. Außerdem kann die dem Kälteraum 7 zugewandte Seite der Innenhaut 8 mit einem oder mehreren nicht dargestellten Türabstellern versehen sein.

Die Außenhaut 9 ist aus Metall, beispielsweise aus Aluminium oder rostfreiem Edelstahl, gefertigt. Die Innenhaut 8 ist aus einem Kunststoff, insbesondere einem mehrschichtigen Kunststoff, gefertigt. Das Metall der Außenhaut 9 ist mit einem Kunststoff auf der dem Hohlraum 10 zugewandten Seite beschichtet

Es ist aber auch möglich, dass die Innenseiten der Innenhaut 8 und der Außenhaut 9 mit einer Folie 12 überzogen ist, wie dies in der Fig. 2 für ein Türblatt 3a, das anstelle des Türblatts 3 für das Haushaltskältegerät 1 verwendet werden kann, gezeigt ist. Die Folie 12 ist insbesondere ein Vakuum isoliertes Panel.

Um die Stabilität des evakuierten Türblatts zu erhöhen, kann dieses in den Hohlraum 10 ragende Verstrebungen 13, ähnlich einem so genannten Dewargefäß, aufweisen, wie dies in der Fig. 3 für ein Türblatt 3b, das anstelle des Türblatts 3 für das Haushaltskältegerät 1 verwendet werden kann, illustriert ist. Zusätzlich kann im Hohlraum 10 eine so genannte Low-E (Low-emissivity, geringes Strahlungsvermögen) Folie 14 angeordnet sein. Low-E Folien 14 sind insbesondere dünne Metallfolien oder Metalloxidfolien, wie sie u. a. auch für die Beschichtung von Wärmeglas verwendet werden, um die Wärmeleitfähigkeit zu verringern.

Im Falle des vorliegenden Ausführungsbeispiels kann zur Erhöhung der Stabilität des in der Fig. 1 gezeigten Türblatts 3 bzw. des in der Fig. 2 gezeigten Türblatts 3a der evakuierte Hohlraum 10 mit einem evakuierten Füllmaterial 15 gefüllt sein. Das evakuierte Füllmaterial 15 kann insbesondere offenporiges Polyurethan oder offenporiges Polystyren, vorzugsweise jedoch Silika (Silikonoxid) Pulver aufweisen.

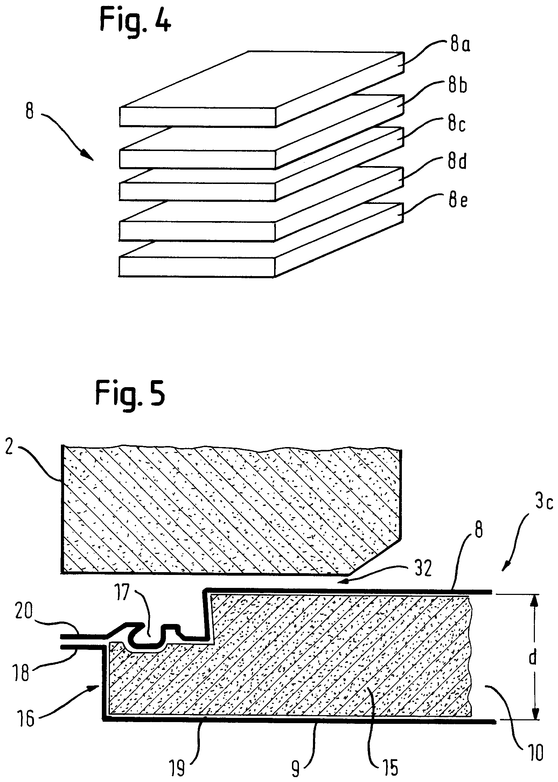

Wie bereits erwähnt, ist die Innenhaut 8, aber auch die dem Hohlraum 10 zugewandte Seite der Außenhaut 9 aus Kunststoff gefertigt, der insbesondere ein mehrschichtiger Kunststoff ist. Der Aufbau der Innenhaut 8 und gegebenenfalls der Aufbau des Kunststoffs der Außenhaut 9 als mehrschichtiger Kunststoff ist in der Fig. 4 dargestellt.

Im Falle des vorliegenden Ausführungsbeispiels weist die als Thermoformteil und aus Kunststoff gefertigte Innenhaut 8 des Türblatts 3, 3a fünf aufeinander folgende Schichten auf, die u. a. eine dem Kühlraum 7 zugewandte Innenschicht 8a und eine dem Hohlraum 10 zugewandte Außenschicht 8e umfassen. Auf der dem Kälteraum 7 abgewandten Seite der Innenschicht 8a ist eine Bindungsschicht 8b und auf der dem Hohlraum 10 abgewandten Seite der Außenschicht 8e ist eine weitere Bindungsschicht 8d aufgetragen. Zwischen den beiden Bindungsschichten 8b, 8d ist eine insbesondere für Gas, beispielsweise Stickstoff, Sauerstoff, Wasserdampf, Kohlendioxid, zumindest weitgehend undurchlässige Sperrschicht 8c angeordnet.

Im Falle des vorliegenden Ausführungsbeispiels besteht die Sperrschicht 8c aus Kunststoff, insbesondere aus EVOH (Ethylen Vinyl Alkohol) oder PVdC (Polyvinylidenchlorid). Bei den Bindungsschichten 8b, 8d handelt es sich insbesondere um Klebeschichten z.B. basierend auf PP (Polypropylen), Epoxy oder EVA (Ethyl Vinyl Acetat).

Im Falle des vorliegenden Ausführungsbeispiels besteht die Innenschicht 8a aus HIPS (High Impact Polystyrene, beispielsweise durch Kautschuk modifiziertes, hochschlagfestes Polystyrol), PP (Polypropylen) oder PE (Polyethen). Die Außenschicht 8e kann beispielsweise ebenfalls aus HIPS, PP oder PE bestehen. Vorzugsweise bestehen sowohl die Innenschicht 8a als auch die Außenschicht 8e aus HIPS oder die Innenschicht 8a aus HIPS und die Außenschicht 8e aus PE.

Um den evakuierten Hohlraum 10 zu schaffen, werden die Innenhaut 8 und die Außenhaut 9 miteinander durch Schweißen oder Kleben miteinander zumindest weitgehend luftdicht verbunden.

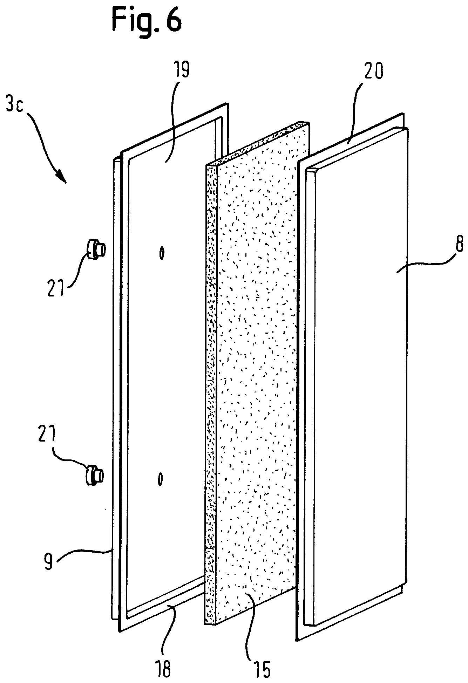

Die Figuren 5 und 6 zeigen ein Türblatt 3c, das anstelle des Türblatts 3 für das Haushaltskältegerät 1 verwendet werden kann, wobei die Innenhaut 8 mit der Außenhaut 9 mittels Schweißens, insbesondere mittels Heizelementschweißens bzw. Heizplattenschweißens, Wärmekontaktschweißens oder Infrarotschweißens an ihren Randbereichen miteinander zumindest weitgehend wärmeisolierend fest verbunden sind. Die Fig. 5 zeigt das Türblatt 3c als Draufsicht in geschnittener Darstellung und die Fig. 6 zeigt das Türblatt 3c in einer Explosionszeichnung.

Im Falle des vorliegenden Ausführungsbeispiels unterscheidet sich das Türblatt 3c im Wesentlichen vom Türblatt 3 durch seine Innenhaut 8, die im Wesentlichen eben ausgeführt ist und im Bereich des Randes 16 des Türblatts 3c beispielsweise durch Tiefziehen eine Vertiefung 17 umfasst, die zur Aufnahme der Dichtung 11 vorgesehen ist. Außerdem ist die insbesondere aus Metall bestehende Außenhaut 9 auf ihrer dem Hohlraum 10 zugewandten Seite mit einer Kunststoffschicht, beispielsweise PP, PE, PET oder EVA (Ethyl Vinyl Acetat), versehen.

Im Falle des vorliegenden Ausführungsbeispiels ist die Innenhaut 8 von der Außenhaut 9 in einem Abstand d von etwa 30 mm bis 40 mm beabstandet. Außerdem ist die Außenhaut 9 im Bereich des Randes 16 des Türblatts 3c in Richtung Innenhaut 8 umgeknickt bzw. umgebogen, wodurch die Außenhaut 9 einen wannenartigen Bereich 19 aufweist, der das Füllmaterial 15 aufnehmen kann. Die Außenhaut 9 weist ferner einen flanschartigen Randbereich 18 auf, der im Wesentlichen parallel zum Randbereich 20 der Innenhaut 8 verläuft. Die beiden Randbereiche 18, 20 der Innenhaut 8 bzw. der Außenhaut 9 werden insbesondere mittels Heizplattenschweißens, Wärmekontaktschweißens oder Infrarotschweißens zumindest weitgehend luftdicht verschweißt. Während des Schweißens verbindet sich die Kunststoffschicht der beschichteten Außenwand 9 im Randbereich 18 mit der aus Kunststoff bestehenden Innenhaut 8 im Randbereich 20, wodurch zwischen der Innenhaut 8 und der Außenhaut 9 eine zumindest weitgehend luftdichte Versiegelungsschicht entsteht.

Um das Türblatt 3c herzustellen, wird zunächst das Füllmaterial 15 in den wannenartigen Bereich 19 der Außenhaut 9 angeordnet. Anschließen wird die Innenhaut 8 auf die Außenhaut 9 gelegt und mit der Außenhaut 9 insbesondere mittels Heizplattenschweißens, Wärmekontaktschweißens oder Infrarotschweißens zumindest weitgehend luftdicht verschweißt. Anschließend wird der Hohlraum 10 z. B. mittels in der Außenhaut 9 angeordneten Ventilen 21 evakuiert. Alternativ ist es auch möglich, den Versiegelungs- bzw. Schweißprozess in einer Vakuumkammer durchzuführen, wodurch auf den Einsatz der Ventile 21 verzichtet werden kann.

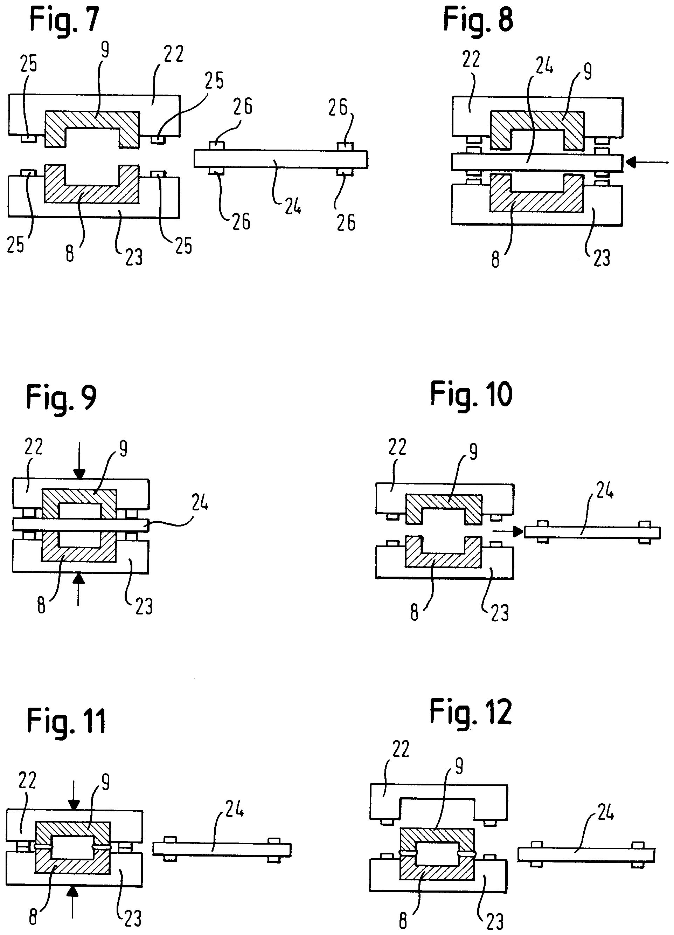

Die Figuren 7 bis 12 veranschaulichen den Prozess des Heizplattenschweißens des Türblatts 3c.

Zunächst werden die Innenhaut 8 und die Außenhaut 9 in eine Haltevorrichtungen 22, 23 angeordnet, wie dies in der Fig. 7 gezeigt ist. Anschließend wird eine Heizplatte 24 zwischen die beiden Haltevorrichtungen 22, 23 eingeführt, siehe Fig. 8, und die beiden Haltevorrichtungen 22, 23 gegeneinander gepresst, so dass die Randbereiche 18, 20 der Innenhaut 8 und der Außenhaut 9 gegen die Heizplatte 24 gepresst werden, siehe Fig. 9. Abstandvorrichtungen 25 der Haltevorrichtungen 22, 23 und Abstandsvorrichtungen 26 der Heizplatte 24 verhindern ein Aufheizen der Haltevorrichtungen 22, 23 während des Erhitzens der Heizplatte 24, um die Kunststoffschicht der beschichteten Außenhaut 9 und die Innenhaut 8 im Wesentlichen nur in ihren Randbereichen 18, 19 zum Schmelzen zu bringen.

Anschließend werden die beiden Haltevorrichtungen 22, 23 geöffnet und die Heizplatte 24 entfernt, siehe Fig. 10, um danach die beiden Haltevorrichtungen 22, 23 wieder gegeneinander zu drücken, damit sich die Innenhaut 8 mit der Außenhaut 9 zumindest weitgehend luftdicht verbindet, siehe Fig. 11. Schließlich werden die Haltevorrichtungen 22, 23 wieder geöffnet, wobei das Türblatt 3c auf der unteren Haltevorrichtung 23 verbleibt, um entnommen werden zu können.

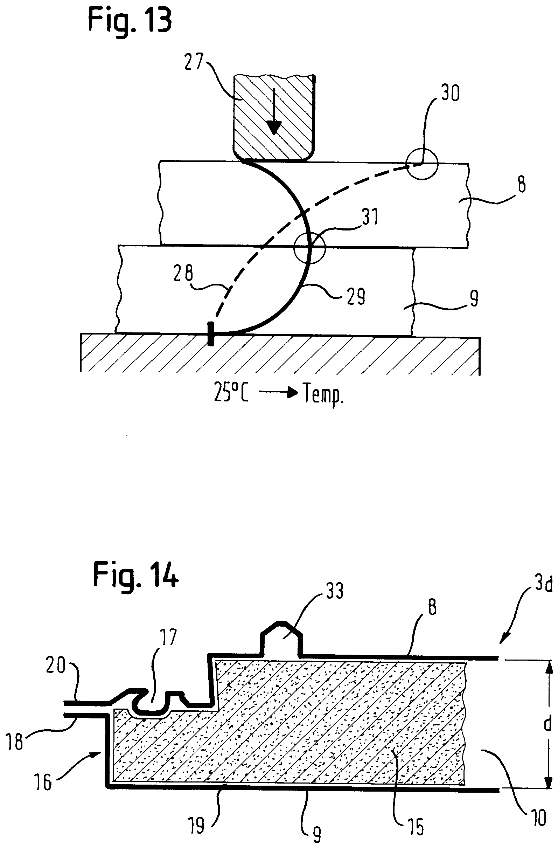

Anstelle des Heizplattenschweißens können die Außenhaut 9 und die Innenhaut 8 auch mittels Wärmekontaktschweißens verbunden werden, wie dies in der Fig. 13 veranschaulicht ist. Für das Wärmekontaktschweißen werden die Innenhaut 8 und die Außenhaut 9 mit ihren Randbereichen 18, 20 aufeinander gelegt und zusammen gepresst. Eine Elektrode 27 wird gegen den Randbereich 20 der Innenhaut 8 oder den Randbereich 18 der Außenhaut 8 geführt und mit einem hochfrequenten elektrischen Strom beaufschlagt. Der Verlauf des durch den elektrischen Strom bedingten Wärmeimpuls ist mit dem Bezugszeichen 28, und der Hochfrequenzverlauf innerhalb der Außenhaut 9 und der Innenhaut 8 ist mit dem Bezugszeichen 29 versehen. Mit dem Bezugszeichen 30 ist die maximale Temperatur bedingt durch den Wärmeimpuls und mit dem Bezugszeichen 31 ist die maximale Temperatur bedingt durch die Hochfrequenz versehen.

Es ist auch möglich, die Außenhaut 9 mit der Innenhaut 8 mittels Infrarotschweißens zu verbinden.

Im geschlossenen Zustand des Türblatts 3c dichtet die Dichtung 11 den Kälteraum 7 ab. Es entsteht jedoch ein Spalt 32 zwischen dem Korpus 2 und der dem Kälteraum 7 zugewandten Seite der Innenhaut 8.

Um den Spalt 32 zu verkleinern, kann die Innenhaut 8 eine insbesondere rahmenförmig umlaufende, im Bereich der Vertiefung 17 zur Aufnahme der Dichtung 11 angeordnete Ausbuchtung 33 aufweisen, wie es in der Fig. 14 für ein Türblatt 3d gezeigt ist. Im geschlossenen Zustand berührt die Ausbuchtung 33 den Korpus 2 oder verkleinert zumindest im Bereich der Ausbuchtung 33 die Breite des Spalts 32.

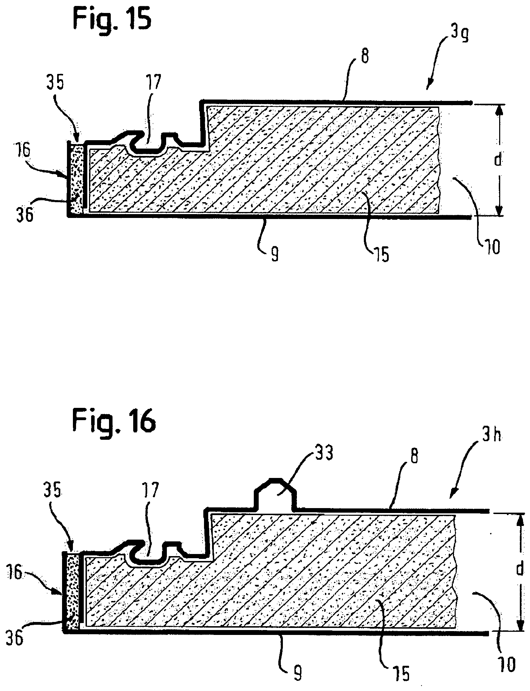

Um den evakuierten Hohlraum 10 zu schaffen, können die Innenhaut 8 und die Außenhaut 9 auch miteinander verklebt werden, wie dies anhand der Figuren 15 und 16 illustriert ist, die weitere Türblätter 3g, 3h zeigen, die anstelle des in der Fig. 1 gezeigten Türblatts 3 für das Haushaltskältegerät 1 verwendet werden kann. Die Türblätter 3g, 3h unterscheidet sich im Wesentlichen vom Türblatt 3 durch ihre Innenhäute 8, die im Wesentlichen eben ausgeführt sind und im Bereich der Ränder 16 der Türblätter 3g, 3h beispielsweise durch Tiefziehen die Vertiefungen 17 umfassen, die zur Aufnahme der Dichtung 11 vorgesehen sind. Das Türblatt 3h der Fig. 16 weist zusätzlich die Ausbuchtung 33 auf.

Im Falle des vorliegenden Ausführungsbeispiels ist die Innenhaut 8 von der Außenhaut 9 in dem Abstand d von etwa 30 mm bis 40 mm beabstandet. Außerdem ist die Innenhaut 8 im Bereich des Randes 16 des Türblatts 3g, 3h in Richtung Außenhaut 9 umgeknickt bzw. umgebogen und die Außenhaut 9 im Bereich des Randes 16 des Türblatts 3g, 3h in Richtung Innenhaut 8 umgebogen bzw. umgeknickt. Dadurch entsteht ein im Wesentlichen entlang des Randes 16 des Türblatts 3g, 3h verlaufender Randspalt 35, der im Falle des vorliegenden Ausführungsbeispiels mit einem Klebstoff 36 gefüllt ist, um die Innenhaut 8 mit der Außenhaut 9 zumindest weitgehend luftdicht zu verbinden. Geeignete Klebstoffe 36 können u. a. auf 2K PU, Epoxy, Gummi, Silikonoxid oder Polyolefin basieren. Corona-, Pyrosil-, Plasma- oder Hitzebehandlung kann die Klebeleistung des Klebstoffs 36 erhöhen. Vorzugsweise werden diejenigen Flächen der Innenhaut 8 und der Außenhaut 9, die miteinander verklebt werden, vor dem Auftragen des Klebstoffes 36 gereinigt. Der umgebogene bzw. umgeknickte Bereich der Außenhaut 9 bildet hier den Rand 16 des Türblatts 3g, 3h.

Im Falle der beschriebenen Ausführungsbeispiele ist zwar der Korpus 2 des Haushaltskältegerätes 1 konventionell aufgebaut. Es ist aber auch möglich, den Korpus 2 mit einem evakuierten Hohlraum auszuführen, ähnlich den Türblättern 3, 3a-h, wobei die Innenhaut 4 und die Außenhaut 5 des Korpus 2 z. B. im Bereich der Dichtung 11 entsprechend miteinander mittels Fügens, insbesondere mittels Klebens oder Schweißens, zumindest weitgehend luftdicht fest verbunden sind. Insbesondere können die Außenhaut 5 aus Metall und die Innenhaut 4 aus dem mehrschichtigen Kunststoff hergestellt sein. Der von der Außenhaut 5 und der Innenhaut 4 eingeschlossene Hohlraum kann dann auch mit einem dem Füllmaterial 15 der Türblätter entsprechenden Füllmaterial gefüllt sein.

## Patentansprüche

1. Türblatt eines Haushaltskältegerätes (1), aufweisend eine erste Haut (8) und eine zweite Haut (9), die an ihren Rändern (18, 20) zumindest weitgehend luftdicht miteinander fest verbunden sind und einen evakuierten Hohlraum (10) einschließen, **dadurch gekennzeichnet, dass** die erste Haut (8) aus einem Kunststoff gefertigt ist und die zweite Haut (9) aus einem mit an der dem Hohlraum (10) zugewandten Seite mit Kunststoff beschichteten Metall gefertigt ist, wobei die erste Haut (8) und die zweite Haut (9) an ihren Rändern (18, 20) durch Kleben oder Schweißen des Kunststoffes der ersten Haut (8) und der Kunststoffbeschichtung der zweiten Haut (9) zumindest weitgehend luftdicht miteinander fest verbunden sind.

2. Türblatt nach Anspruch 1, **dadurch gekennzeichnet, dass** das Metall der zweiten Haut (9) Aluminium oder rostfreier Edelstahl ist.

3. Türblatt nach Anspruch 2, **dadurch gekennzeichnet, dass** die aus Kunststoff gefertigte erste Haut (8) und/oder die zweite Haut (9) einen Kunststoff mit mehreren Schichten (8a-8e) umfasst.

4. Türblatt nach Anspruch 3, **dadurch gekennzeichnet, dass** wenigstens eine der Schichten als eine für Gas, insbesondere für Stickstoff, Sauerstoff, Wasserdampf und/oder Kohlendioxid zumindest weitgehend undurchlässige Sperrschicht (8c) insbesondere aus EVOH oder PVdC ausgebildet ist.

5. Türblatt nach Anspruch 3 oder 4, **dadurch gekennzeichnet, dass** wenigstens eine der Schichten als Bindungsschicht (8b, 8d) ausgeführt ist, die zwischen zwei der Schichten (8a, 8c, 8e) angeordnet ist.

6. Türblatt nach Anspruch 5, **dadurch gekennzeichnet, dass** die Bindungsschicht als eine Klebeschicht (8b, 8d) insbesondere basierend auf PP, Epoxy oder EVA ausgeführt ist.

7. Türblatt nach einem der Ansprüche 3 bis 6, **dadurch gekennzeichnet, dass** die dem Hohlraum (10) zugewandte Schicht (8a) und/oder die nach außen gerichtete Schicht aus HIPS, PP oder PE gefertigt ist.

8. Türblatt nach Anspruch 1, **dadurch gekennzeichnet, dass** die erste Haut (8) und die zweite Haut (9) an ihren Rändern (18, 20) mittels eines Klebstoffs (36), der auf 2K PU, Epoxy, Gummi, Silikonoxid oder Polyolefin basiert und/oder einer Corona-, Pyrosil-, Plasma- oder Hitzebehandlung unterzogen wurde, zumindest weitgehend luftdicht miteinander fest verbunden sind.

9. Türblatt nach Anspruch 8, **dadurch gekennzeichnet, dass** die erste Haut (8) in ihrem Randbereich (20) insbesondere umfänglich in Richtung der zweiten Haut (9) umgebogen oder umgeknickt ist und die zweite Haut (9) in ihrem Randbereich (18) insbesondere umfänglich in Richtung der ersten Haut (8) umgebogen oder umgeknickt ist, wodurch ein zwischen den umgeknickten oder umgebogenen Bereichen der ersten und zweiten Haut (8, 9) ein Spalt (35) entsteht, der mit dem Klebstoff (36) gefüllt ist.

10. Türblatt nach Anspruch 1, **dadurch gekennzeichnet, dass** die erste Haut (8) und die zweite Haut (9) an ihren Rändern (18, 20) mittels Schweißens, insbesondere mittels Heizplattenschweißens, Wärmekontaktschweißens oder Infrarotschweißens zumindest weitgehend luftdicht miteinander fest verbunden sind.

11. Türblatt nach einem der Ansprüche 1 bis 10, **dadurch gekennzeichnet, dass** die zweite Haut (9) in ihrem Randbereich (18) in Richtung der ersten Haut (8) gebogen oder geknickt ist und in ihrem Randbereich (18) einen parallel zur ersten Haut (8) flanschartigen Abschnitt aufweist, der mit dem Randbereich (20) der ersten Haut (8) zumindest weitgehend luftdicht fest verbunden ist.

12. Türblatt nach einem der Ansprüche 1 bis 11, **dadurch gekennzeichnet, dass** die dem Hohlraum (10) zugewandten Seiten der ersten Haut (8) und der zweiten Haut (9) mit einer Folie (12) überzogen sind, und/oder die erste Haut (8) und/oder die zweite Haut (9) mit in den Hohlraum (10) ragende Verstrebungen (13) versehen ist, und/oder im Hohlraum (10) eine Low-E Folie (14) angeordnet ist.

13. Türblatt nach einem der Ansprüche 1 bis 12, **dadurch gekennzeichnet, dass** der Hohlraum (10) mit einem evakuierten Füllmaterial (15) insbesondere aus offenporigem Polyurethan, offenporigem Polystyren oder Silika Pulver gefüllt ist.

14. Haushaltskältegerät, aufweisend einen wärmeisolierenden Korpus (2), der einen Kälteraum (7) begrenzt, und ein an dem Korpus (2) angeschlagenes Türblatt (3, 3a-3h), **dadurch gekennzeichnet, dass** das Türblatt (3, 3a-3h) nach einem der Ansprüche 1 bis 13 ausgebildet ist, wobei die erste Haut als eine dem Kälteraum (7) zugewandte Innenhaut (8) und die zweite Haut als eine dem Kälteraum (7) abgewandte Außenhaut (9) des Türblatts (3, 3a-3h) ausgebildet ist.

15. Haushaltskältegerät nach Anspruch 14, **dadurch gekennzeichnet, dass** im geschlossenen Zustand das Türblatt (3, 3a-3h) und der Korpus (2) einen Spalt (32) bilden und die Innenhaut (8) auf ihrer dem Kälteraum (7) zugewandten Seite eine Ausbuchtung (33) zum Verkleinern der Breite des Spalts (32) aufweist und/oder die Innenhaut (8) und die Außenhaut (9) des Türblatts (3, 3a-3h) in einem Abstand (d) von 30 mm bis 40 mm voneinander beabstandet sind.

## Claims

1. Door leaf of a domestic refrigeration appliance (1), having a first skin (8) and a second skin (9) which are permanently connected to each other at their edges (18, 20) in an at least largely airtight manner and enclose an evacuated cavity (10), **characterised in that** the first skin (8) is made of a plastic and the second skin (9) is made of a metal coated with plastic on its side facing towards the cavity (10), wherein the first skin (8) and the second skin (9) are permanently connected to each other at their edges (18, 20) by adhesion or welding of the plastic of the first skin (8) and the plastic coating of the second skin (9) in an at least largely airtight manner.

2. Door leaf according to claim 1, **characterised in that** the metal of the second skin (9) is aluminium or stainless steel.

3. Door leaf according to claim 2, **characterised in that** the first skin (8) made of plastic and/or the second skin (9) comprise a plastic with a number of layers (8a-8e).

4. Door leaf according to claim 3, **characterised in that** at least one of the layers is embodied as a barrier layer (8c) at least largely impermeable to gas, especially nitrogen, oxygen, water vapour and/or carbon dioxide, especially from EVOH or PVdC.

5. Door leaf according to claim 3 or 4, **characterised in that** at least one of the layers is embodied as a binding layer (8b, 8d) which is arranged between two of the layers (8a, 8c, 8e).

6. Door leaf according to claim 5, **characterised in that** the binding layer is embodied as an adhesive layer (8b, 8d) especially based on PP, epoxy or EVA.

7. Door leaf according to one of claims 3 to 6, **characterised in that** the layer (8a) facing towards the cavity (10) and/or the layer directed outwards is made of HIPS, PP or PE.

8. Door leaf according to claim 1, **characterised in that** the first skin (8) and the second skin (9) are permanently connected to each other at their edges (18, 20) by means of an adhesive (36) which is especially based on 2K PU, epoxy, rubber, silicon oxide or polyolefin and/or has been subjected to a corona, pyrosil, plasma or heat treatment process, in an at least largely airtight manner.

9. Door leaf according to claim 8, **characterised in that** the first skin (8), in its edge area (20), especially around the circumference, is bent over or folded over in the direction of the second skin (9) and the second skin (9), in its edge area (18), especially around the circumference, is bent over or folded over in the direction of the first skin (8), which produces a gap (35) between the folded-over or bent-over areas of the first and second skin (8, 9) which is filled with the adhesive (36).

10. Door leaf according to claim 1, **characterised in that** the first skin (8) and the second skin (9) are permanently joined to each other at their edges (18, 20) by means of welding, especially by means of hot plate welding, thermal contact welding or infrared welding in an at least largely airtight manner.

11. Door leaf according to one of claims 1 to 10, **characterised in that** the second skin (9) is bent over or folded over in its edge area (18) in the direction of the first skin (8) and in its edge area (18) has a flange-type section in parallel to the first skin (8) which is permanently joined to the edge area (20) of the first skin (8) in an at least largely airtight manner.

12. Door leaf according to one of claims 1 to 11, **characterised in that** the sides of the first skin (8) and the second skin (9) facing towards the cavity (10) are covered by a film (12), and/or the first skin (8) and/or the second skin (9) is provided with struts (13) protruding into the cavity (10), and/or a Low-E film (14) is arranged in the cavity (10).

13. Door leaf according to one of claims 1 to 12, **characterised in that** the cavity (10) is filled with an evacuated fill material (15), especially consisting of open-pore polyurethane, open-pore polystyrene or silica powder.

14. Domestic refrigeration appliance, having a heat-insulating carcass (2) which delimits a refrigeration compartment (7) and a door leaf (3, 3a-3h) hinged against the carcass (2), **characterised in that** the door leaf (3, 3a-3h) is embodied in accordance with one of claims 1 to 13, whereby the first skin is embodied as an inner skin (8) facing towards the refrigeration compartment (7) and the second skin as an outer skin (9) of the door leaf (3, 3a-3h) facing away from the refrigeration compartment (7).

15. Domestic refrigeration appliance according to claim 14, **characterised in that**, in the closed state, the door leaf (3, 3a-3h) and the carcass (2) form a gap (32) and the inner skin (8) on its side facing towards the refrigeration compartment (7) has a raised area (33) to reduce the width of the gap (32) and/or the inner skin (8) and the outer skin (9) of the door leaf (3, 3a-3h) are spaced at a distance (d) of 30 mm to 40 mm from each other.

## Revendications

1. Vantail d'un appareil frigorifique ménager (1), présentant une première pellicule (8) et une deuxième pellicule (9), qui à leurs arêtes (18, 20) sont assemblées solidement l'une à l'autre d'une manière au moins substantiellement étanche à l'air et comprennent une cavité (10) sous vide, **caractérisé en ce que** la première pellicule (8) est fabriquée en une matière synthétique et la deuxième pellicule (9) est fabriquée en un métal revêtu de matière synthétique sur le côté tourné vers la cavité (10), la première pellicule (8) et la deuxième pellicule (9) étant solidement assemblées l'une à l'autre à leurs arêtes (18, 20) par collage ou soudage de la matière synthétique de la première pellicule (8) et du revêtement de matière synthétique de la deuxième pellicule (9) d'une manière au moins substantiellement étanche à l'air.

2. Vantail selon la revendication 1, **caractérisé en ce que** le métal de la deuxième pellicule (9) est de l'aluminium ou de l'acier inoxydable.

3. Vantail selon la revendication 2, **caractérisé en ce que** la première pellicule (8) fabriquée en matière synthétique et/ou la deuxième pellicule (9) comprend une matière synthétique multicouche (8a-8e).

4. Vantail selon la revendication 3, **caractérisé en ce qu'**au moins une des couches est réalisée en particulier en EVOH ou PVdC, comme une couche d'arrêt (8c) d'une manière au moins substantiellement imperméable aux gaz, en particulier à l'azote, à l'oxygène, à la vapeur d'eau et/ou au dioxyde de carbone.

5. Vantail selon la revendication 3 ou 4, **caractérisé en ce qu'**au moins une des couches est exécutée comme une couche de liaison (8b, 8d), qui est disposée entre deux des couches (8a, 8c, 8e).

6. Vantail selon la revendication 5, **caractérisé en ce que** la couche de liaison est exécutée comme une couche adhésive (8b, 8d) en particulier à base de PP, d'époxy ou d'EVA.

7. Vantail selon l'une des revendications 3 à 6, **caractérisé en ce que** la couche (8a) tournée vers la cavité (10) et/ou la couche orientée vers l'extérieur est fabriquée en HIPS, PP ou PE.

8. Vantail selon la revendication 1, **caractérisé en ce que** la première pellicule (8) et la deuxième pellicule (9) sont sur leurs arêtes (18, 20), assemblées solidement l'une à l'autre d'une manière au moins substantiellement étanche à l'air, au moyen d'un adhésif (36) à base de 2K PU, d'époxy, de caoutchouc, d'oxyde de silicone ou de polyoléfine, et/ou ont subi un traitement corona, pyrosil, plasma ou thermique.

9. Vantail selon la revendication 8, **caractérisé en ce que** la première pellicule (8) en sa zone marginale (20) est pliée ou craquée en particulier en grande partie vers la deuxième pellicule (9), et la deuxième pellicule (9) en sa zone marginale (18) est pliée ou craquée en particulier en grande partie vers la première pellicule (8), ce qui produit une fissure (35) entre les zones craquées ou pliées de la première et de la deuxième pellicule (8, 9), laquelle est remplie de l'adhésif (36).

10. Vantail selon la revendication 1, **caractérisé en ce que** la première pellicule (8) et la deuxième pellicule (9) sont à leurs arêtes (18, 20) solidement assemblées l'une à l'autre d'une manière au moins substantiellement étanche à l'air par soudage, en particulier par soudage à chaud, soudage par contact thermique ou soudage infrarouge.

11. Vantail selon l'une des revendications 1 à 10, **caractérisé en ce que** la deuxième pellicule (9) en sa zone marginale (18) est pliée ou craquée vers la première pellicule (8) et, en sa zone marginale (18) présente une section de type collerette parallèlement à la première pellicule (8), qui est solidement assemblée d'une manière au moins substantiellement étanche à l'air à la zone marginale (20) de la première pellicule (8).

12. Vantail selon l'une des revendications 1 à 11, **caractérisé en ce que** les côtés de la première pellicule (8) et de la deuxième pellicule (9) tournés vers la cavité (10), sont recouverts d'une feuille (12), et/ou la première pellicule (8) et/ou la deuxième pellicule (9) sont munies d'entretoises (13) dépassant dans la cavité (10), et/ou une feuille Low-E (14) est disposée dans la cavité (10).

13. Vantail selon l'une des revendications 1 à 12, **caractérisé en ce que** la cavité (10) est remplie d'une matière de charge (15) sous vide, en particulier de polyuréthane à pores ouverts, de polystyrène à pores ouverts ou de poudre de silice.

14. Appareil frigorifique ménager, présentant un corps thermiquement isolant (2) qui délimite un espace réfrigéré (7) et un vantail (3, 3a-3h) monté au corps (2), **caractérisé en ce que** le vantail (3, 3a-3h) est réalisé selon l'une des revendications 1 à 13, la première pellicule étant réalisée comme une pellicule intérieure (8) tournée vers l'espace réfrigéré (7) et la deuxième pellicule, comme une pellicule extérieure (9) du vantail ((3, 3a-3h) opposée à l'espace réfrigéré (7).

15. Appareil frigorifique ménager selon la revendication 14, **caractérisé en ce que**, à l'état fermé, le vantail (3, 3a-3h) et le corps (2) forment une fissure (32) et la pellicule intérieure (8) présente sur son côté tourné vers l'espace réfrigéré (7), une protubérance (33) pour diminuer l'épaisseur de la fissure (32) et/ou la pellicule intérieure (8) et la pellicule extérieure (9) du vantail (3, 3a-3h) sont écartées l'une de l'autre d'une distance (d) de 30 mm à 40 mm.
